# EUROPÄISCHE PATENTSCHRIFT

(11) **EP 2 102 640 B1**
(45) Veröffentlichungstag und Bekanntmachung des Hinweises auf die Patenterteilung: **27.10.2010**
(21) Anmeldenummer: 07856550.4
(22) Anmeldetag: 11.12.2007
(51) Int. Cl.: G01N 25/72, G01N 21/88, B23K 11/25

(54) **VERFAHREN ZUR AUTOMATISCHEN PRÜFUNG EINER MATERIALVERBINDUNG**
METHOD FOR THE AUTOMATIC ANALYSIS OF A MATERIAL BOND
PROCÉDÉ DE VÉRIFICATION AUTOMATIQUE D'UNE JONCTION DE MATÉRIAU

(30) Priorität: 21.12.2006 DE 102006061794
(43) Veröffentlichungstag der Anmeldung: 23.09.2009
(73) Patentinhaber: Thermosensorik Gmbh, 91058 Erlangen (DE)
(72) Erfinder: LOUBAN, Roman, 74564 Crailsheim (DE); ZETTNER, Jürgen, 90567 Veitsbronn (DE); DÖTTINGER, Christoph Dr., 91056 Erlangen (DE)
(74) Vertreter: Hofmann, Stefan
(86) Internationale Anmeldenummer: PCT/EP2007/010800
(87) Internationale Veröffentlichungsnummer: WO 2008/077479

(56) Entgegenhaltungen:
- WO-A-01/50116
- WO-A-99/10733
- DE-A1- 10 150 633
- JP-A- 8 122 051

## Beschreibung

Die Erfindung betrifft ein Verfahren zur automatischen, berührungslosen und zerstörungsfreien Prüfung einer Materialverbindung von mindestens zwei Fügepartnern gemäß dem Oberbegriff des Anspruchs 1.

Schweißpunkte stellen in der Industrie eine wichtige Materialverbindung dar. Ein Schweißpunkt weist im Normalfall eine Zwei-Bereich-Verbindung auf, die aus einer geschmolzenen und einer nicht geschmolzenen Zone besteht. Die geschmolzene Zone liegt in einem inneren Bereich des Schweißpunktes und bildet die sogenannte Schweißlinse. Die nicht geschmolzene Zone liegt um die Schweißlinse herum und wird als Schweißkleber bezeichnet. In der nicht geschmolzenen Zone sind die Fügepartner nicht miteinander verschweißt. Demzufolge weisen diese in der nicht geschmolzenen Zone keine ausreichend gute Verbindung auf, sondern lediglich eine gewisse Haftung. Die Qualität des Schweißpunktes wird somit im Wesentlichen durch die Schweißlinse bestimmt.

Es ist bekannt, die Qualität eines Schweißpunktes mittels einer zerstörenden Prüfung zu bewerten. Eine derartige Prüfung ist jedoch nur in Stichproben möglich. Eine häufigere Prüfung - bis hin zu einer 100 %-igen Prüfung - ist nur mittels eines zerstörungsfreien Prüfverfahrens möglich.

Die Wärmefluss-Thermographie ist ein seit Jahren etabliertes berührungsloses und zerstörungsfreies Prüfverfahren. Nach diesem Verfahren wird ein Prüfling von mindestens einer Anregungsquelle angeregt, um einen Wärmefluss zu erzeugen. Die vom Prüfling emittierte Wärmestrahlung wird mit mindestens einem Infrarotsensor in einer Bildserie erfasst. In einer Recheneinheit werden aus der erfassten Bildserie Ergebnisbilder verschiedenster Typen erzeugt. Derartige Ergebnisbilder sind beispielsweise ein Amplitudenbild und ein Phasenbild, die entsprechend die Amplitude und die Laufzeit der thermischen Wellen in verschiedenen Punkten einer Materialverbindung darstellen. Mittels eines Phasenbildes ist es möglich, örtliche Wärmeleitfähigkeitsunterschiede einer Materialverbindung sichtbar zu machen (Theory and Practice of Infrared Technology for Nondestructive Testing, Xavier P. V. Maldague, John Wiley and Sons, Inc., 2001).

Aus der WO 01/50116 A1 ist ein Verfahren zur automatischen Prüfung von Schweißpunkten bekannt, bei dem die Qualität eines Schweißpunktes anhand einer Halbwertszeit des Wärmeflusses bewertet wird. Weist der Wärmefluss in den einzelnen Bildpunkten eine niedrige Halbwertszeit auf, so deutet dies auf eine qualitativ gute Schweißverbindung hin. Nachteilig bei diesem Verfahren ist, dass die ermittelten absoluten Halbwertszeiten keinen objektiven Hinweis liefern, wo sich die Grenze zwischen der Schweißlinse und dem Schweißkleber befindet. Deshalb ist keine automatische Bestimmung der Größe und der Position des Schweißpunktes mit diesem Verfahren unter industriellen Bedingungen möglich.

Aus der DE 101 50 633 A1 ist ein Verfahren zur automatischen Prüfung eines Schweißpunktes bekannt, bei dem die Qualität des Schweißpunktes mittels eines Phasenbildes bewertet wird. Das verwendete Phasenbild wird mit festen Parametern gewonnen, die vor der Aufnahme der zu untersuchenden Bildserie festgelegt werden. Die Qualifizierung des Schweißpunktes erfolgt unter Einbezug von fest definierten Schwellwerten. Nachteilig bei diesem Verfahren ist, dass die zu bewertende Schweißlinse mit fest definierten Schwellwerten unter industriellen Bedingungen nicht zuverlässig detektierbar ist.

Aus der JP 08 122051 A ist ein Verfahren zur zerstörungsfreien Prüfung eines Schweißpunktes bekannt, bei dem die Fügepartner erhitzt und mittels einer Infrarotkamera Thermobilder des Schweißpunktes aufgenommen werden. Der Durchmesser der Schweißlinse wird aus der zweiten Ableitung der örtlichen Temperaturverteilung ermittelt.

Aus der WO 99/10733 A1 ist ein Verfahren zur zerstörungsfreien Prüfung eines Schweißpunktes bekannt, bei dem für jedes Pixel der Infrarotkamera anhand des zeitlichen Verlaufs der Signalamplitude entschieden wird, ob dieses zu der Schweißlinse gehört.

Die beiden letzten Verfahren erlauben jedoch keine ausreichend genaue Detektierung einer Grenze zwischen der Schweißlinse und dem Schweißkleber in einem Schweißpunkt.

Der Erfindung liegt die Aufgabe zugrunde, ein Verfahren zur automatischen, berührungslosen und zerstörungsfreien Prüfung einer Materialverbindung zu schaffen, das eine zuverlässige Detektierung und Bewertung der geschmolzenen Zone einer Materialverbindung ermöglicht.

Diese Aufgabe wird durch die Merkmale des Anspruchs 1 gelöst. Erfindungsgemäß wurde erkannt, dass die Grenze zwischen der geschmolzenen Zone und der nicht geschmolzenen, aber noch haftenden Zone ein zusätzliches Hindernis für den Wärmefluss bildet. An dieser Grenze findet eine sprungartige Abschwächung der Wärmeflussdynamik statt. Unmittelbar nach dieser Grenze weist der Wärmefluss in der nicht geschmolzenen Zone wieder eine höhere Dynamik auf. In einem Ergebnisbild, das die Wärmeflussdynamik durch die Materialverbindung als Intensitätswerte des Ergebnisbildes darstellt, bildet sich an dieser Stelle ein Intensitätswulst.

Auf diesem Ergebnisbild wird zuerst eine Wärmeflussdynamik ermittelt, die zu einer Umgebung der zu untersuchenden Materialverbindung gehört und damit einen Bildhintergrund bildet. Die Wärmeflussdynamik des Bildhintergrunds wird beispielsweise mit Hilfe eines Histogramms ermittelt. Ein sich von der Wärmeflussdynamik des Bildhintergrundes abhebender Wert stellt einen dynamischen minimalen Schwellwert dar, der einen Bereich abgrenzt, in dem sich sowohl die nicht geschmolzene Zone als auch die geschmolzene Zone der Materialverbindung befinden können. In diesem Bereich wird dann ein Spitzenwert der Wärmeflussdynamik durch die Materialverbindung ermittelt, der einen dynamischen maximalen Schwellwert darstellt. Ein dynamischer Schwellwert, der zwischen dem minimalen Schwellwert und dem maximalen Schwellwert variiert wird, definiert eine Reihe von Bereichen in dem Ergebnisbild, welche jeweils die Werte der Wärmeflussdynamik durch die Materialverbindung erfassen, die oberhalb des dynamischen Schwellwertes liegen. Diese Bereiche werden hinsichtlich ihres Umfangs untersucht. Als Folge des Intensitätswulstes weisen diese Bereiche bei einer Überquerung der Grenze zwischen der geschmolzenen Zone und der nicht geschmolzenen Zone eine sprungartige Vergrößerung ihrer Außenkontur auf. Der Umfang dieser Bereiche, der ihre Außenkontur numerisch darstellt, wird gemessen und in einem Merkmalsvektor erfasst. Ein Sprung in diesem Merkmalsvektor deutet darauf hin, dass der zugehörige Bereich einen Teil der nicht geschmolzenen Zone in sich eingeschlossen hat. Dieser Sprung des Merkmalsvektors kann beispielsweise mit Standardmethoden der Kurvenglättung und Kurvenuntersuchung ermittelt werden. Somit wird die Grenze zwischen der geschmolzenen Zone und der nicht geschmolzenen Zone einer Materialverbindung dynamisch und objektiv lokalisiert. Dies gewährleistet eine zuverlässige Detektierung der geschmolzenen Zone. Danach wird die detektierte geschmolzene Zone nach ihrer Position und Größe bewertet.

Sofern eine Anregung und eine Aufnahme des Wärmeflusses von der gleichen Seite der Materialverbindung stattfindet, erfolgt eine Reduzierung der Wärmeflussdynamik durch die Materialverbindung bei Überschreiten der Grenze zwischen der geschmolzenen Zone und der nicht geschmolzenen Zone. In diesem Fall weisen die untersuchten Bereiche bei der Überquerung der Grenze als Folge des Intensitätswulstes eine sprunghafte Reduzierung ihres Umfanges auf. Somit wird ein Sprung nach unten in dem Merkmalsvektor ermittelt.

Das beschriebene Verfahren ist prinzipiell für alle Fügepartner gleich. Dementsprechend können Materialverbindungen von Fügepartnern aus gleichen oder unterschiedlichen Materialien untersucht werden. Weiterhin können sowohl Schweißverbindungen als auch Lötverbindungen untersucht werden. Diese Materialverbindungen weisen eine Grenze zwischen einer geschweißten und einer nicht geschweißten Zone bzw. eine Grenze zwischen einer gelöteten und einer nicht gelöteten Zone auf. Dementsprechend bildet sich auf dem Ergebnisbild, das örtliche Wärmeleitfähigkeitsunterschiede der zu untersuchenden Materialverbindung darstellt, ein Intensitätswulst aus. Dieser Intensitätswulst kann mit Hilfe von Standardmethoden der Signal- und Bildverarbeitung ermittelt und zur Detektierung und Bewertung der Schweiß- und Lötverbindung genutzt werden.

Die Anregung der Materialverbindung und die Aufnahme des Wärmeflusses kann prinzipiell von unterschiedlichen Seiten oder von gleichen Seiten der Materialverbindung folgen. Dementsprechend werden Ergebnisbilder verschiedener Typen ausgewertet, die einen Wärmefluss in Transmission und/oder in Reflexion mit zeitlicher und räumlicher Auflösung darstellen. Intensitätsschwankungen der Anregungsquelle, der Zustand und die Eigenschaften der Materialoberfläche sowie die Dicke des Materials der Fügepartner dürfen die Messergebnisse für den Wärmefluss nicht maßgeblich beeinflussen. Deshalb wird ein Ergebnisbild benutzt, das keine absoluten Werte des Wärmeflusses bzw. seiner Geschwindigkeit durch die zu untersuchende Materialverbindung darstellt, sondern örtliche Geschwindigkeitsunterschiede des Wärmeflusses. Ein solches Ergebnisbild kann beispielsweise ein Phasenbild sein, das mit der Infrarot-Lock-In-Thermographie gewonnen wird (Theory and Practice of Infrared Technology for Non-destructive Testing, Xavier P. V. Maldague, John Wiley and Sons, Inc., 2001). Ein Phasenbild zeigt die Laufzeit der thermischen Wellen durch die Materialverbindung, so dass Wärmeleitfähigkeitsunterschiede der Materialverbindung zwischen den verschiedenen Bildpunkten des Ergebnisbildes sichtbar werden. Die örtlichen Geschwindigkeitsunterschiede des Wärmeflusses werden als Wärmeflussdynamik bezeichnet. Vorzugsweise wird der dynamische Schwellwert mit einer Schrittweite variiert, die iterativ ermittelt wird. Durch eine iterative Ermittlung der Schrittweite wird das Auffinden einer optimalen Schrittweite ermöglicht. Die Suche nach einer optimalen Schrittweite kann beispielsweise mit der Schrittweite 1 beginnen.

Ein Referenzbereich nach Anspruch 2 stellt sicher, dass der minimale Schwellwert aus der Wärmeflussdynamik des Bildhintergrundes ermittelt wird.

Ein Testbereich nach Anspruch 3 ermöglicht eine einfache Ermittlung des maximalen Schwellwertes. Der Testbereich kann sich beispielsweise im Schwerpunkt des zu untersuchenden Bereiches befinden. Die Größe des Testbereichs kann experimentell ermittelt werden, wobei das Shannonsche Abtasttheorem einzuhalten ist (Industrielle Bildverarbeitung, Christan Demant, Bernd Streicher-Abel, Peter Waszkewitz, Springer-Verlag, 1998). Beispielsweise kann die Größe des Testbereichs als 3 x 3 Pixel festgelegt werden.

Eine Ermittlung des maximalen Schwellwertes aus mehreren Testbereichen gleicher Größe nach Anspruch 4 ist zuverlässig. Die Testbereiche werden derart generiert, dass ein Testbereich mit einer festgelegten Größe durch den Bereich verschoben wird, der die oberhalb des minimalen Schwellwertes liegenden Werte der Wärmeflussdynamik erfasst. Die Größe der Testbereiche kann beispielsweise als 3 x 3 Pixel festgelegt werden.

Ein Schweißpunkt nach Anspruch 5, der eine als Schweißlinse bezeichnete geschmolzene Zone und eine als Schweißkleber bezeichnete nicht geschmolzene, aber noch haftende Zone aufweist, ist eine industriell bedeutende Materialverbindung, so dass die Vorteile des erfindungsgemäßen Verfahrens besonders zum Tragen kommen.

Eine materialcharakteristische Kennlinie nach Anspruch 6 ermöglicht eine eindeutige Ermittlung der Materialreststärke eines Schweißpunktes und damit des Eindrucks, der an dem Schweißpunkt aufgrund der Schweißzange entstanden ist. Für die Untersuchung der Materialverbindung wird im Voraus die materialcharakteristische Kennlinie für die zu untersuchende Materialkombination der Fügepartner ermittelt. Die materialcharakteristische Kennlinie stellt eine nichtlineare Abhängigkeit zwischen dem Spitzenwert der Wärmeflussdynamik und der Materialreststärke eines Schweißpunktes dar. Die Daten für die Kennlinie werden an verschiedenen Referenz-Schweißpunkten der gleichen Materialkombination gewonnen, wobei die Referenz-Schweißpunkte unterschiedliche Materialreststärken aufweisen. Die durchgehende und zerstreuende Komponente des Wärmeflusses spielen bei der Ermittlung der Materialreststärke unterschiedliche Rollen. Sofern die Materialreststärke eines Schweißpunktes klein ist, wird die durchgehende Komponente des Wärmeflusses den Spitzenwert der Wärmeflussdynamik bestimmen. Bei einer Vergrößerung der Materialreststärke wird die zerstreuende Komponente des Wärmeflusses mehr an Bedeutung gewinnen. Der im Bereich der Schweißlinse gemessene Spitzenwert der Wärmeflussdynamik kann somit zur Ermittlung der Materialreststärke verwendet werden. Der Spitzenwert der Wärmeflussdynamik entspricht dem maximalen Schwellwert, der im Bereich der Schweißlinse des Schweißpunktes gemessen wird. Die Materialreststärken der Referenz-Schweißpunkte werden mit einer unabhängigen Methode gemessen.

Ein Vergleich mit einem ersten Grenzwert nach Anspruch 7 ermöglicht die Detektierung von Löchern. Ein zu hoher Wert der Wärmeflussdynamik weist darauf hin, dass der Schweißpunkt ein Loch aufweist. Der erste Grenzwert wird erfahrungsgemäß ermittelt.

Ein Vergleich mit einem zweiten Grenzwert nach Anspruch 8 ermöglicht die Detektierung von Hohlräumen. Ein zu niedriger Wert der Wärmeflussdynamik weist darauf hin, dass die Schweißlinse einen Hohlraum enthält. Eine derartige Schweißlinse wird als ausgebrannte Schweißlinse bezeichnet. Der zweite Grenzwert wird erfahrungsgemäß ermittelt.

Eine Weiterbildung des Verfahrens nach Anspruch 9 ermöglicht ein gezieltes Suchen nach Oberflächenbeschädigungen in dem Bereich der detektierten Schweißlinse. Die Begrenzung des Fehlersuchbereiches auf den Bereich der Schweißlinse schützt das Verfahren vor falschen Ergebnissen. Das weitere Bild kann beispielsweise eines der erfassten Thermobilder oder ein weiteres Ergebnisbild sein. Als Ergebnisbild kann beispielsweise ein Amplitudenbild, das mit der Infrarot-Lock-In-Thermographie gewonnen wird, verwendet werden. Das Amplitudenbild zeigt die Amplitude der thermischen Wellen durch den Scheißpunkt. Die detektierten Fehler ermöglichen je nach ihrer Herkunft, Größe und Position sowie ihrer Kombination eine Klassifizierung und somit eine eindeutige Beurteilung der Qualität des Schweißpunktes. Weiterhin können die Ursachen des fehlerhaften Schweißpunktes festgestellt und zurückverfolgt werden, so dass eine statische Beurteilung des gesamten Schweißprozesses als Basis für eine Qualitätssicherung möglich ist.

Weitere Merkmale und Vorteile der Erfindung ergeben sich aus der Beschreibung eines Ausführungsbeispiels anhand der Zeichnung. Es zeigen:

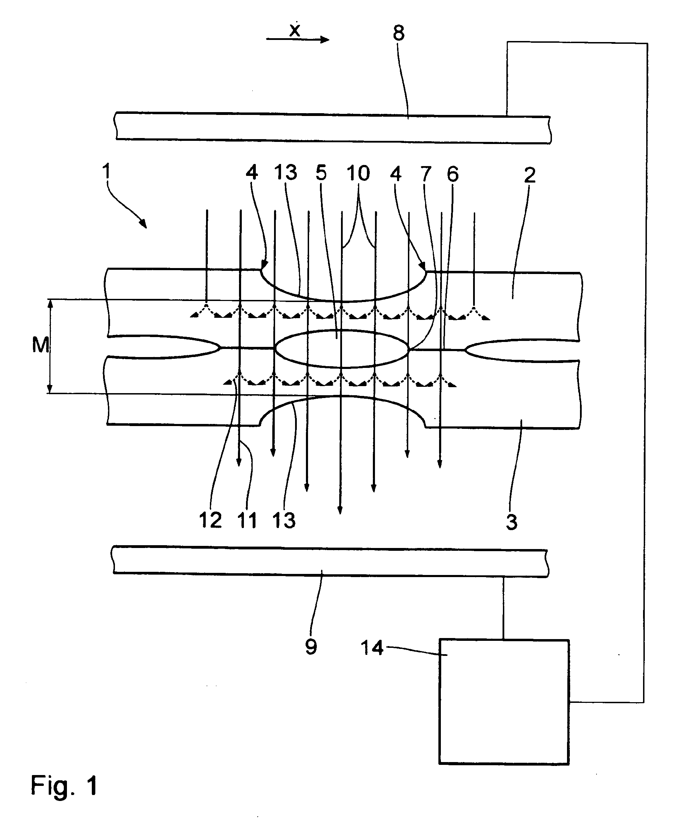

- Fig. 1: eine Schnittdarstellung durch eine als Schweißpunkt ausgebildete Materialverbindung,
- Fig. 2: eine Darstellung einer eindimensionalen Verteilung einer Wärme- flussdynamik durch den Schweißpunkt,
- Fig. 3: eine Darstellung eines ersten Merkmalsvektors, der einen Umfang von zu untersuchenden Bereichen in Abhängigkeit der Wärmefluss- dynamik darstellt,
- Fig. 4: eine Darstellung eines zweiten Merkmalsvektors, der einen Umfang von zu untersuchenden Bereichen in Abhängigkeit der Wärmefluss- dynamik darstellt, und

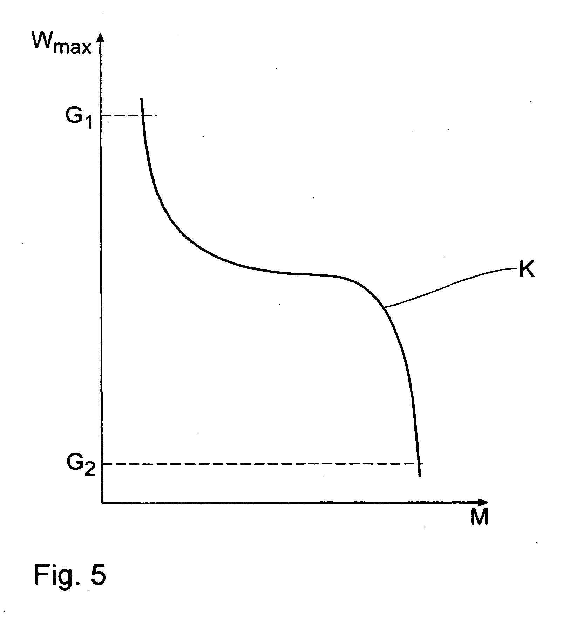

- Fig. 5: eine materialcharakteristische Kennlinie, die einen Spitzenwert der Wärmeflussdynamik in Abhängigkeit einer Materialreststärke dar- stellt.

Ein Prüfling 1 weist einen ersten Fügepartner 2 und einen zweiten Fügepartner 3 auf, die durch eine Materialverbindung 4 miteinander verbunden sind. Die Fügepartner 2, 3 können aus gleichen oder unterschiedlichen Materialien mit einer gleichen oder unterschiedlichen Materialdicke ausgebildet sein. Die Materialverbindung 4 ist als Schweißpunkt ausgebildet. Nachfolgend wird die Materialverbindung als Schweißpunkt 4 bezeichnet.

Der Schweißpunkt 4 bildet eine Zwei-Bereich-Verbindung aus, die aus einer geschmolzenen Zone 5 und einer um diese herum liegenden nicht geschmolzenen Zone 6 besteht. Zwischen der geschmolzenen Zone 5 und der nicht geschmolzenen Zone 6 liegt eine Grenze 7, die die geschmolzene Zone 5 begrenzt und von der nicht geschmolzenen, aber noch haftenden Zone 6 abgrenzt. Die geschmolzene Zone wird nachfolgend als Schweißlinse 5 und die nicht geschmolzene Zone als Schweißkleber 6 bezeichnet. An gegenüberliegenden Seiten des Prüflings 1 sind eine Anregungsquelle 8 und ein Infrarotsensor 9 angeordnet.

Der Prüfung 1 und der zu untersuchende Schweißpunkt 4 werden mittels der Anregungsquelle 8 impulsartig angeregt. Es entsteht ein Wärmefluss 10, der aus einer durchgehenden Komponente 11 und einer zerstreuenden Komponente 12 besteht. Die zerstreuende Komponente 12 wird auch als dissipative Komponente bezeichnet. Die durchgehende Komponente 11 des Wärmeflusses 10 wird mittels des Infrarotsensors 9 in einer Serie von hintereinander aufgenommenen Thermobildern erfasst.

Der Schweißpunkt 4 weist an jedem Fügepartner 2, 3 einen Eindruck 13 auf. Die Eindrücke 13 entstehen aufgrund einer Schweißzange, die bei der Herstellung des Schweißpunktes 4 verwendet wird. Die Eindrücke 13 definieren eine Materialreststärke M.

Zur Auswertung der erfassten Serie von Thermobilder ist eine Recheneinheit 14 vorgesehen, die mit der Anregungsquelle 8 und dem Infrarotsender 9 in Verbindung steht. Aus der Serie von Thermobildern werden Ergebnisbilder verschiedener Typen gewonnen. Ein Ergebnisbild in Form eines Phasenbildes stellt die Wärmeflussdynamik W durch den Schweißpunkt 4 dar. Die Wärmeflussdynamik W beschreibt die örtlichen Geschwindigkeitsunterschiede des Wärmeflusses 10 durch den Schweißpunkt 4 und stellt somit die örtlichen Wärmeleitfähigkeitsunterschiede dar.

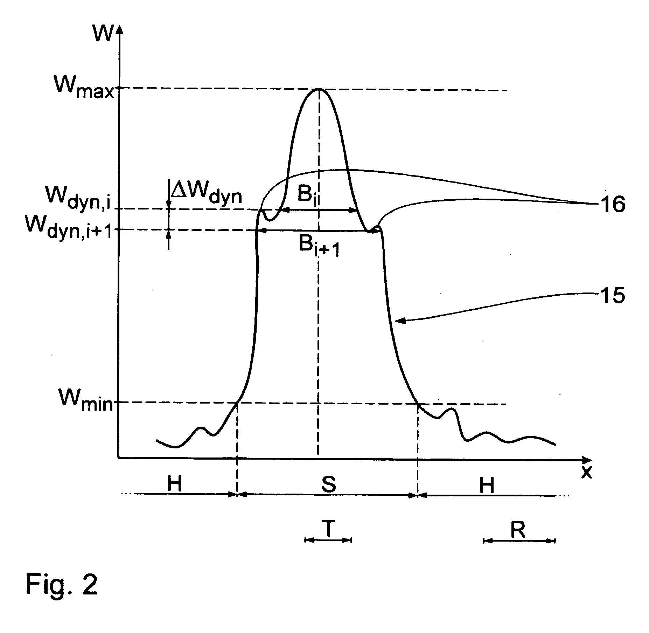

Fig. 2 zeigt eine eindimensionale Verteilung 15 der Wärmeflussdynamik W entlang einer Querschnittskoordinate x. Die Wärmeflussdynamik W weist grundsätzlich eine zweidimensionale Verteilung auf. Diese entspricht qualitativ der eindimensionalen Verteilung 15, jedoch kann die zweidimensionale Verteilung im Allgemeinfall entsprechend der Geometrie des Schweißpunktes 4 unsymmetrisch und unregelmäßig sein.

Die zweidimensionale Verteilung der Wärmeflussdynamik W wird maßgeblich von der Geometrie des Schweißpunktes 4 bestimmt. Die Geometrie des Schweißpunktes 4 ist von den Eindrücken 13 der Schweißzange eingeprägt. Nachfolgend wird die eindimensionale Verteilung 15 der Wärmeflussdynamik W genauer beschrieben. Um die Schweißlinse 5 korrekt detektieren zu können, muss jedoch die zweidimensionale Verteilung der Wärmeflussdynamik W ausgewertet werden, wobei die nachfolgenden Ausführungen für die zweidimensionale Verteilung entsprechend gelten.

Die Wärmeflussdynamik W weist in einem Zentrum des Schweißpunktes 4 einen Spitzenwert auf, wobei die Wärmeflussdynamik W ausgehend von diesem Spitzenwert zu der Peripherie des Schweißpunktes 4 hin abfällt. Erfindungsgemäß wurde erkannt, dass die Grenze 7 zwischen der Schweißlinse 5 und dem Schweißkleber 6 eine zusätzliche lokale Abschwächung der Wärmeflussdynamik W verursacht, wobei unmittelbar nach dieser Grenze wieder eine höhere Wärmeflussdynamik W auftritt. Dieser Effekt führt zur Bildung eines Intensitätswulstes 16, der in Fig. 2 für die eindimensionale Verteilung 15 der Wärmeflussdynamik W dargestellt ist. Der Effekt des Ausbildens eines Intensitätswulstes 16 kann um die Schweißlinse 5 herum unsymmetrisch und unregelmäßig sein, weshalb zur korrekten Detektierung der Schweißlinse 5 die zweidimensionale Verteilung der Wärmeflussdynamik W ausgewertet werden muss.

Zur Detektierung der Schweißlinse 5 wird zunächst ein minimaler Schwellwert Wₘᵢₙ ermittelt. Der minimale Schwellwert Wₘᵢₙ liegt oberhalb der Wärmeflussdynamik W eines Bildhintergrundes H. Der minimale Schwellwert Wₘᵢₙ wird aus einem Referenzbereich R der Wärmeflussdynamik W des Bildhintergrundes H ermittelt, der sicher dem Bildhintergrund H zugehört.

Weiterhin wird ein maximaler Schwellwert Wₘₐₓ ermittelt, der dem Spitzenwert der Wärmeflussdynamik W durch den Schweißpunkt 4 entspricht. Der maximale Schwellwert Wₘₐₓ wird aus einem Testbereich T ermittelt, der sich mittig in einem Bereich S befindet, der die oberhalb des minimalen Schwellwertes Wₘᵢₙ liegenden Werte der Wärmeflussdynamik W erfasst. Der maximale Schwellwert Wₘₐₓ ist ein Mittelwert der Werte der Wärmeflussdynamik W aus dem Testbereich T.

Alternativ kann der maximale Schwellwert Wₘₐₓ aus mehreren Testbereichen T gleicher Größe ermittelt werden, wobei sich die Testbereiche T relativ zueinander verschoben in dem Bereich S befinden und zu jedem Testbereich T ein Mittelwert der Werte der Wärmeflussdynamik W aus dem Testbereich T ermittelt wird. Der maximale Schwellwert Wₘₐₓ ist der maximale Wert dieser Mittelwerte.

Zur Detektierung der Schweißlinse 5 wird ein dynamischer Schwellwert W_{dyn} zwischen dem minimalen Schwellwert Wₘᵢₙ und dem maximalen Schwellwert Wₘₐₓ variiert. Die variierten dynamischen Schwellwerte werden mit W_{dyn, i} bezeichnet, wobei i = 1 bis n ist. Der dynamische Schwellwert W_{dyn} wird mit einer Schrittweite ΔW_{dyn} variiert. Das bedeutet, dass zwei aufeinander folgende dynamische Schwellwerte W_{dyn, i} und W_{dyn, i+1} um die Schrittweite ΔW_{dyn} voneinander beabstandet sind. Die optimale Schrittweite ΔW_{dyn} kann iterativ ermittelt werden.

Zu jedem dynamischen Schwellwert W_{dyn, i} wird ein zugehöriger Bereich Bᵢ der Wärmeflussdynamik W durch den Schweißpunkt 4 ermittelt, wobei der Bereich Bᵢ die oberhalb des dynamischen Schwellwertes W_{dyn, i} liegenden Werte der Wärmeflussdynamik W erfasst. Jeder Bereich Bᵢ weist einen zugehörigen Umfang Uᵢ auf, der ermittelt und in einem Merkmalsvektor erfasst wird. Alle Bereiche B werden anschließend hinsichtlich einer sprunghaften Umfangsänderung ΔU untersucht. Wird der dynamische Schwellwert W_{dyn} zwischen dem maximalen Schwellwert Wₘₐₓ und dem minimalen Schwellwert Wₘᵢₙ variiert, so findet eine sprungartige Vergrößerung des Umfangs U statt, wenn ein zu untersuchender Bereich B die Grenze 7 zwischen der Schweißlinse 5 und dem Schweißkleber 6 überquert. Fig. 2 zeigt einen Bereich Bᵢ mit einem Umfang Uᵢ, wobei der Bereich Bᵢ die Grenze 7 noch nicht überschritten hat. Weiterhin zeigt Fig. 2 einen Bereich Bᵢ₊₁ mit einem Umfang Uᵢ₊₁, wobei der Bereich Bᵢ₊₁ die Grenze 7 bereits überschritten hat. Der Bereich Bᵢ₊₁ schließt somit ein Stück des Schweißklebers 6 ein. Das eingeschlossene Stück des Schweißklebers 6 weist eine höhere Wärmeflussdynamik W auf, als die Grenze 7. Der Bereich Bᵢ ist somit der größte Bereich, der die Grenze 7 noch nicht überschritten hat und somit keinen Teil des Schweißklebers 6 umfasst. Der Bereich Bᵢ entspricht somit im Wesentlichen der Schweißlinse 5. Die Position und die Größe der Schweißlinse 5 kann somit anhand des Bereichs Bᵢ und dessen zugehörigen Umfang Uᵢ bewertet werden.

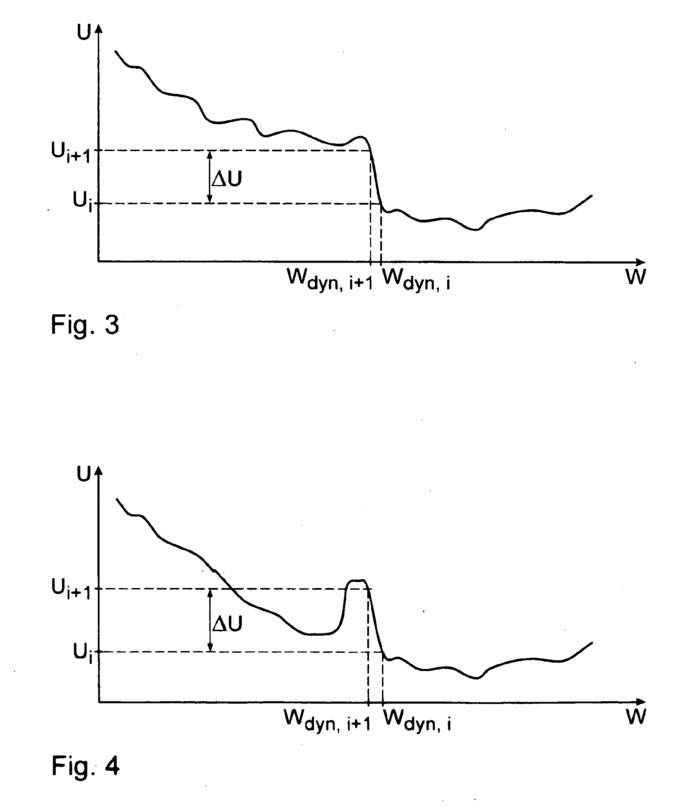

Der sprunghaften Umfangsänderung ΔU kann je nach Zustand der Außenkontur der zu untersuchenden Bereiche B eine rasche Umfangsänderung nach unten - wie in Fig. 4 dargestellt ist - oder eine weitere Steigerung des Umfangs U - wie in Fig. 3 dargestellt ist - folgen. Dies geht aus dem Poissonschen Effekt (Gerthsen Physik, 23. Auflage, S. 130 ff., Springer-Verlag, 2006) hervor, dass ein Objekt mit einer stark entwickelten Außenkontur bei einem Zuwachs seiner Fläche die vorhandenen Konturabweichungen von einem idealen Kreis entweder schließen oder weiter ausbauen kann. Schließen sich bei einer Vergrößerung des Objekts diese Abweichungen, wird sich der Umfang verkleinern. Wenn die Abweichungen im Wesentlichen geschlossen sind, wird sich der Umfang des Objekts wieder stetig vergrößern.

Die sprunghafte Umfangsänderung ΔU der zu untersuchenden Bereiche B kann mit Hilfe von Standardmethoden der Signal- und Bildverarbeitung ermittelt werden. Somit kann eine unsymmetrische und unregelmäßige Bildung des Intensitätswulstes 16 um die Schweißlinse 5 herum detektiert werden. Eine dynamische und adaptive und damit automatische Detektierung der Schweißlinse 5 ist somit gewährleistet.

Der Spitzenwert der Wärmeflussdynamik W, der als maximaler Schwellwert Wₘₐₓ ermittelt wurde, kann für eine berührungslose und zerstörungsfreie Prüfung der Materialreststärke M in dem Schweißpunkt 4 verwendet werden. Zur Ermittlung der Materialreststärke M wird für die zu untersuchenden Fügepartner 2, 3 in der zu untersuchenden Materialkombination im Voraus eine materialcharakteristische Kennlinie K ermittelt. Die Kennlinie K wird an Referenz-Schweißpunkten ermittelt, die unterschiedliche Materialreststärken aufweisen, wobei die Referenz-Schweißpunkte entsprechende Fügepartner 2, 3 miteinander verbinden, die auch später zu untersuchen sind. Zu jedem Referenz-Schweißpunkt wird eine Materialreststärke M mittels eines unabhängigen Verfahrens gemessen. Weiterhin wird zu jedem Referenz-Schweißpunkt ein Spitzenwert der Wärmeflussdynamik W gemessen. Die Kennlinie K beschreibt die nichtlineare Abhängigkeit zwischen dem Spitzenwert der Wärmeflussdynamik W und der Materialreststärke M.

Durch die Kennlinie K kann die Materialreststärke M des zu untersuchenden Schweißpunktes 4 und der an dem Schweißpunkt 4 entstandenen Eindrücke 13 einer Schweißzange untersucht werden. Der maximale Schwellwert Wₘₐₓ des zu untersuchenden Schweißpunktes 4 wird mit einem ersten Grenzwert G₁ verglichen, wobei ein Überschreiten dieses Grenzwertes G₁ darauf hinweist, dass der Schweißpunkt 4 ein Loch aufweist. Weiterhin wird der maximale Schwellwert Wₘₐₓ des zu untersuchenden Schweißpunktes 4 mit einem zweiten Grenzwert G₂ verglichen, wobei ein Unterschreiten dieses Grenzwertes G₂ darauf hinweist, dass der Schweißpunkt 4 einen Hohlraum aufweist. Die Grenzwerte G₁, G₂ werden erfahrungsgemäß ermittelt.

Außerdem können verschiedene Oberflächenbeschädigungen des Schweißpunktes 4 detektiert und ausgewertet werden. Die Detektierung und Auswertung von Oberflächenbeschädigungen erfolgt in dem detektierten Bereich Bᵢ der Schweißlinse 5. Für die Detektierung von Oberflächenbeschädigungen wird ein weiteres Bild genutzt, das über ein gleiches Koordinatensystem verfügt, wie das Ergebnisbild mittels dem die Schweißlinse 5 detektiert wurde. Ein derartiges Bild kann beispielsweise ein Thermobild oder ein Amplitudenbild sein, das mittels Infrarot-Lock-In-Thermographie (Theory and Practice of Infrared Technology for Nondestructive Testing, Xavier P. V. Maldague, John Wiley and Sons, Inc., 2001) ermittelt wird. Dadurch, dass die Fehlersuche auf den Bereich Bᵢ der Schweißlinse 5 begrenzt ist, wird das Verfahren vor falschen Ergebnissen geschützt. Die Grenze 7 zwischen der Schweißlinse 5 und dem Schweißkleber 6 wird beispielsweise nicht als Fehler erkannt. Die Auswertung und Fehlerdetektierung kann mit Hilfe von Standardmethoden der Signal- und Bildverarbeitung durchgeführt werden.

Die detektierten Schweißpunktfehler können je nach ihrer Herkunft, Größe und Position sowie ihrer Kombination zu einer Klassifizierung des Schweißpunktes 4 herangezogen werden. Dies erlaubt eine eindeutige Beurteilung der Qualität des zu untersuchenden Schweißpunktes 4.

Das erfindungsgemäße Verfahren gewährleistet eine automatische, berührungslose und zerstörungsfreie Prüfung eines Schweißpunktes 4 unter industriellen Bedingungen. Es wird eine umfassende Fehlererkennung ermöglicht, die eine eindeutige und zuverlässige Klassifizierung des zu untersuchenden Schweißpunktes 4 sicherstellt.

## Patentansprüche

1. Verfahren zur automatischen, berührungslosen und zerstörungsfreien Prüfung einer Materialverbindung (4) von mindestens zwei Fügepartnern (2, 3),
a. wobei die Materialverbindung (4) eine Zwei-Bereich-Verbindung ist, welche
i. aus einer geschmolzenen Zone (5), und
ii. aus einer um diese herum liegenden und nicht geschmolzenen Zone (6) besteht,
b. wobei eine Untersuchung von Infrarotbildern erfolgt, so dass
i. mindestens eine Anregungsquelle (8) einen Prüfling (1) anregt,
ii. mindestens ein Infrarotsensor (9) einen entstehenden Wärmefluss (10) in einer Serie von Thermobildern erfasst,
iii. Ergebnisbilder aus der Serie von Thermobildern gewonnen werden, und
iv. die Thermobilder und die Ergebnisbilder untersucht werden,
**dadurch gekennzeichnet, dass**
c. die geschmolzene Zone (5) aus einem Ergebnisbild ermittelt wird, das eine Wärmeflussdynamik (W) durch die Materialverbindung (4) darstellt, wobei die örtlichen Geschwindigkeitsunterschiede des Wärmeflusses als Wärmeflussdynamik (W) bezeichnet sind, indem
i. ein minimaler Schwellwert (Wₘᵢₙ), der oberhalb einer Wärmeflussdynamik (W) eines Bildhintergrundes (H) liegt, ermittelt wird,
ii. ein maximaler Schwellwert (Wₘₐₓ), der einem Spitzenwert der Wärmeflussdynamik (W) durch die Materialverbindung (4) entspricht, ermittelt wird,
iii. ein dynamischer Schwellwert (W_{dyn,i}) zwischen dem minimalen Schwellwert (Wₘᵢₙ) und dem maximalen Schwellwert (Wₘₐₓ) variiert wird,
iv. eine Reihe von Bereichen (Bᵢ) der Wärmeflussdynamik (W) durch die Materialverbindung (4) ermittelt wird, die oberhalb des dynamischen Schwellwertes (W_{dyn,i}) liegende Werte der Wärmeflussdynamik (W) erfassen,
v. zu den Bereichen (Bᵢ) ein jeweils zugehöriger Umfang (Uᵢ) ermittelt wird,
vi. die Bereiche (Bᵢ) der Wärmeflussdynamik (W) hinsichtlich einer sprunghaften Umfangsänderung (ΔU) untersucht werden,
vii. die geschmolzene Zone (5) als der Kleinere Bereich (Bᵢ) aus den zwei aufeinander folgenden, zu der sprunghaften Umfangsänderung (ΔU) gehörigen Bereichen (Bᵢ, B_{i + 1}) ermittelt wird, wobei die sprunghafte Umfangsänderung (ΔU) darauf hinweist, dass der zu diesem Bereich (Bᵢ) gehörige Umfang (Uᵢ) eine Grenze (7) zwischen der geschmolzenen Zone (5) und der nicht geschmolzenen Zone (6) nicht überschritten hat, und
viii. eine Position und eine Größe der geschmolzenen Zone (5) bewertet wird.

2. Verfahren nach Anspruch 1, **dadurch gekennzeichnet, dass** der minimale Schwellwert (Wₘᵢₙ) aus einem Referenzbereich (R) der Wärmeflussdynamik (W) des Bildhintergrundes (H) ermittelt wird.

3. Verfahren nach Anspruch 1 oder 2, **dadurch gekennzeichnet, dass** der maximale Schwellwert (Wₘₐₓ) aus einem Testbereich (T) ermittelt wird,
a. wobei sich der Testbereich (T) mittig in einem Bereich (S) befindet, der die oberhalb des minimalen Schwellwertes (Wₘᵢₙ) liegenden Werte der Wärmeflussdynamik (W) erfasst, und
b. wobei der maximale Schwellwert (Wₘₐₓ) ein Mittelwert der Werte der Wärmeflussdynamik (W) aus dem Testbereich (T) ist.

4. Verfahren nach Anspruch 1 oder 2, **dadurch gekennzeichnet, dass** der maximale Schwellwert (Wₘₐₓ) aus mehreren Testbereichen (T) gleicher Größe ermittelt wird, wobei
a. die Testbereiche (T) sich in einem Bereich (S) befinden, der die oberhalb des minimalen Schwellwertes (Wₘᵢₙ₎ liegenden Werte der Wärmeflussdynamik (W) erfasst,
b. wobei zu jedem Testbereich (T) ein Mittelwert der Werte der Wärmeflussdynamik (W) aus dem Testbereich (T) ermittelt wird, und
c. der maximale Schwellwert (Wₘₐₓ) ein maximaler Wert der Mittelwerte ist.

5. Verfahren nach einem der Ansprüche 1 bis 4, **dadurch gekennzeichnet, dass** die Materialverbindung (4) ein Schweißpunkt ist, wobei die geschmolzene Zone (5) als Schweißlinse und die nicht geschmolzene Zone (6) als Schweißkleber bezeichnet wird.

6. Verfahren nach Anspruch 5, **dadurch gekennzeichnet, dass** der Schweißpunkt mittels einer materialcharakterischen Kennlinie (K) bewertet wird, wobei
a. die Kennlinie (K) an Referenz-Schweißpunkten ermittelt wird, die unterschiedliche Materialreststärken (M) aufweisen und mindestens zwei Fügepartner (2, 3) miteinander verbinden,
b. zu jedem Referenz-Schweißpunkt die Materialreststärke (M) gemessen wird,
c. zu jedem Referenz-Schweißpunkt ein Spitzenwert einer Wärmeflussdynamik (W) gemessen wird, und
d. die Kennlinie (K) aus den Spitzenwerten der Wärmeflussdynamik (W) und den zugehörigen Materialreststärken (M) gebildet wird.

7. Verfahren nach Anspruch 6, **dadurch gekennzeichnet, dass** der maximale Schwellwert (Wₘₐₓ) mit einem ersten Grenzwert (G₁) verglichen wird, wobei ein Überschreiten des ersten Grenzwertes (G₁) darauf hinweist, dass der Schweißpunkt ein Loch aufweist.

8. Verfahren nach Anspruch 6 oder 7, **dadurch gekennzeichnet, dass** der maximale Schwellwert (Wₘₐₓ) mit einem zweiten Grenzwert (G₂) verglichen wird, wobei ein Unterschreiten des zweiten Grenzwertes (G₂) darauf hinweist, dass der Schweißpunkt einen Hohlraum aufweist.

9. Verfahren nach einem der Ansprüche 5 bis 8, **dadurch gekennzeichnet, dass** in einem weiteren Bild Oberflächenbeschädigungen des Schweißpunktes detektiert werden, wobei
a. das Bild über ein gleiches Koordinatensystem verfügt, wie das Ergebnisbild mittels dem die Schweißlinse ermittelt wurde, und
b. die Detektierung und Auswertung von Oberflächenbeschädigungen in dem ermittelten Bereich (Bᵢ) der Schweißlinse erfolgt.

## Claims

1. Method for automated, contactless and non-destructive testing of a material joint (4) of at least two mating parts (2, 3),
a. with the material joint (4) being a two-section joint which consists of
i. a molten zone (5) and
ii. a non-molten zone (6) surrounding said molten zone (5);
b. with an examination of infrared images taking place in such a way that
i. at least one excitation source (8) excites a test sample (1);
ii. at least one infrared sensor (9) detects a developing heat flow in a sequence of thermal images;
iii. result images are obtained from the sequence of thermal images; and
iv. the thermal images and the result images are examined;
**characterized in that**
c. the molten zone (5) is detected from a result image, which illustrates a heat flow dynamics (W) through the material joint (4), wherein the local speed differences of the heat flow are referred to as heat flow dynamics (W), by
i. determining a minimum threshold value (Wₘᵢₙ) which exceeds a heat flow dynamics (W) of an image background (H);
ii. determining a maximum threshold value (Wₘₐₓ) which corresponds to a peak value of the heat flow dynamics (W) through the material joint (4);
iii. varying a dynamic threshold value (W_{dyn, i}) between the minimum threshold value (Wₘᵢₙ) and the maximum threshold value (Wₘₐₓ);
iv. determining a sequence of regions (Bᵢ) of the heat flow dynamics (W) through the material joint (4) which represent the values of the heat flow dynamics (W) exceeding the dynamic threshold value (W_{dyn, i});
v. determining a respective perimeter (Uᵢ) each belonging to the regions (Bᵢ);
vi. examining the regions (Bᵢ) of the heat flow dynamics (W) with respect to an abrupt change in perimeter (ΔU);
vii. determining the molten zone (5) as the smaller region (Bᵢ) from the two subsequent regions (Bᵢ, B_{i + 1}) belonging to the abrupt change in perimeter (ΔU), the abrupt change in perimeter (ΔU) indicating that the perimeter (Uᵢ) belonging to this region (Bᵢ) has not crossed a boundary (7) between the molten zone (5) and the non-molten zone (6); and
viii. evaluating a position and a size of the molten zone (5).

2. Method according to claim 1, **characterized in that** the minimum threshold value (Wₘᵢₙ) is determined from a reference region (R) of the heat flow dynamics (W) of the image background (H).

3. Method according to claim 1 or 2, **characterized in that** the maximum threshold value (Wₘₐₓ) is determined from a test region (T),
a. with the test region (T) being located in the center of a region (S) which represents the values of the heat flow dynamics (W) that exceed the minimum threshold value (Wₘᵢₙ); and
b. with the maximum threshold value (Wₘₐₓ) being an average value of the values of the heat flow dynamics (W) from the test region (T).

4. Method according to claim 1 or 2, **characterized in that** the maximum threshold value (Wₘₐₓ) is determined from several test regions (T) of the same size, with
a. the test regions (T) being located in a region (S) which represents the values of the heat flow dynamics (W) exceeding the minimum threshold value (Wₘᵢₙ),
b. with an average value of the values of the heat flow dynamics (W) being determined for each test region (T) from the test region (T), and
c. the maximum threshold value (Wₘₐₓ) being a maximum value of the average values.

5. Method according to one of claims 1 to 4, **characterized in that** the material joint (4) is a weld point, with the molten zone (5) being referred to as weld nugget and the non-molten zone (6) being referred to as weld glue.

6. Method according to claim 5, **characterized in that** the weld point is evaluated by means of a material characteristic curve (K), with
a. the characteristic curve (K) being determined by means of reference weld points which have different remaining material thicknesses (M) and interconnect at least two mating parts (2, 3);
b. the remaining material thickness (M) being measured for each reference weld point;
c. a peak value of a heat flow dynamics (W) being measured for each reference weld point; and
d. the characteristic curve (K) being generated from the peak values of the heat flow dynamics (W) and the associated remaining material thicknesses (M).

7. Method according to claim 6, **characterized in that** the maximum threshold value (Wₘₐₓ) is compared with a first limiting value (G₁), with the presence of a hole in the weld point being indicated if said maximum threshold value (Wₘₐₓ) exceeds said limiting value (G₁).

8. Method according to claim 6 or 7, **characterized in that** the maximum threshold value (Wₘₐₓ) is compared with a second limiting value (G₂), with the presence of a cavity in the weld point being indicated if said maximum threshold value (Wₘₐₓ) is less than the second limiting value (G₂).

9. Method according to one of claims 5 to 8, **characterized in that** surface damages of the weld point are detected by means of another image, with
a. the image being provided with a coordinate system which is identical to that of the result image by means of which the weld nugget was detected; and
b. the detection and evaluation of surface damages taking place in the detected region (Bᵢ) of the weld nugget.

## Revendications

1. Procédé de vérification automatique, sans contact et non destructive d'une jonction de matériau (4) d'au moins deux pièces à joindre (2, 3),
a. dans lequel la jonction de matériau (4) est une jonction 'deux zones' constituée :
i. d'une zone fondue (5), et
ii. d'une zone non fondue (6) entourant celle-ci,
b. dans lequel est réalisé un examen d'images infrarouges de façon telle que
i. au moins une source d'excitation (8) excite un échantillon(1),
ii. au moins un capteur infrarouge (9) détecte un flux thermique (10) généré dans une série d'images thermiques,
iii. des images résultantes sont obtenues à partir de la série d'images thermiques, et
iv. les images thermiques et les images résultantes sont examinées,
**caractérisé en ce que**
c. la zone fondue (5) est déterminée à partir d'une image résultante qui représente une dynamique de flux thermique (W) à travers la jonction de matériau (4), les différences de vitesse locales du flux thermique étant désignées en tant que dynamique de flux thermique (W),
i. en déterminant une valeur seuil minimale (Wₘᵢₙ) qui est supérieure à une dynamique de flux thermique (W) d'un fond d'image (H),
ii. en déterminant une valeur seuil maximale (Wₘₐₓ) qui correspond à une valeur de crête de la dynamique de flux thermique (W) à travers la jonction de matériau (4),
iii. en faisant varier une valeur seuil dynamique (W_{dyn,i}) entre la valeur seuil minimale (Wₘᵢₙ) et la valeur seuil maximale (Wₘₐₓ)
iv. en déterminant une série de régions (Bᵢ) de la dynamique de flux thermique (W) à travers la jonction de matériau (4), qui détectent des valeurs de la dynamique de flux thermique (W) supérieures à la valeur seuil dynamique (W_{dyn,i})
v. en déterminant une circonférence (Uᵢ) correspondante des régions (Bᵢ) respectives,
vi. en examinant les régions (Bᵢ) de la dynamique de flux thermique (W) relativement à une modification de circonférence erratique (ΔU),
vii. en déterminant la zone fondue (5) en tant que la région (Bᵢ) la plus petite des deux régions successives (Bᵢ, B_{i + 1}) appartenant à la modification de circonférence erratique (ΔU), la modification de circonférence erratique (ΔU) indiquant que la circonférence (Uᵢ) appartenant à cette région (Bᵢ) n'a pas dépassé une limite (7) entre la zone fondue (5) et la zone non fondue (6), et
viii. en évaluant une position et une dimension de la zone fondue (5).

2. Procédé selon la revendication 1, **caractérisé en ce que** la valeur seuil minimale (Wₘᵢₙ) est déterminée à partir d'une région de référence (R) de la dynamique de flux thermique(W) du fond d'image (H).

3. Procédé selon la revendication 1 ou 2, **caractérisé en ce que** la valeur seuil maximale (Wₘₐₓ) est déterminée à partir d'une région de test (T),
a. la région de test (T) se trouvant au centre d'une région (S) qui détecte les valeurs de la dynamique de flux thermique (W) supérieures à la valeur seuil minimale (Wₘᵢₙ), et
b. la valeur seuil maximale (Wₘₐₓ) étant une valeur moyenne des valeurs de la dynamique de flux thermique (W) issues de la région de test (T).

4. Procédé selon la revendication 1 ou 2, **caractérisé en ce que** la valeur seuil maximale (Wₘₐₓ) est déterminée à partir de plusieurs régions de test (T) de même dimension, dans lequel
a. les régions de test (T) se trouvent dans une région (S) qui détecte les valeurs supérieures à la valeur seuil minimale (Wₘᵢₙ) de la dynamique de flux thermique (W),
b. pour chaque région de test (T), une valeur moyenne des valeurs de la dynamique de flux thermique (W) est déterminée à partir de la région de test (T), et
c. la valeur seuil maximale (Wₘₐₓ) est une valeur maximale des valeurs moyennes.

5. Procédé selon l'une des revendications 1 à 4, **caractérisé en ce que** la jonction de matériau (4) est un point de soudure, la zone fondue (5) étant désignée en tant que lentille de soudure et la zone non fondue (6) en tant qu'adhésif de soudure.

6. Procédé selon la revendication 5, **caractérisé en ce que** le point de soudure est évalué au moyen d'une courbe caractéristique de matériau (K), dans lequel
a. la courbe caractéristique (K) est déterminée à des points de soudure de référence qui présentent des épaisseurs résiduelles de matériau (M) différentes et relient entre elles au moins deux pièces à joindre (2, 3),
b. à chaque point de soudure de référence est mesurée l'épaisseur résiduelle de matériau (M),
c. à chaque point de soudure de référence est mesurée une valeur de crête d'une dynamique de flux thermique (W), et
d. la courbe caractéristique (K) est formée à partir des valeurs de crête de la dynamique de flux thermique (W) et des épaisseurs résiduelles de matériau (M) correspondantes.

7. Procédé selon la revendication 6, **caractérisé en ce que** la valeur de seuil maximale (Wₘₐₓ) est comparée à une première valeur limite (G₁), un dépassement de la première valeur limite (G₁) indiquant que le point de soudure présente un trou.

8. Procédé selon la revendication 6 ou 7, **caractérisé en ce que** la valeur de seuil maximale (Wₘₐₓ) est comparée à une deuxième valeur limite (G₂), un passage en dessous de la deuxième valeur limite (G₂) indiquant que le point de soudure présente une cavité.

9. Procédé selon l'une des revendications 5 à 8, **caractérisé en ce que** des détériorations superficielles du point de soudure sont détectées dans une autre image, où
a. l'image dispose du même système de coordonnées que l'image résultante au moyen de laquelle la lentille de soudure a été déterminée, et
b.la détection et l'évaluation de détériorations superficielles s'opèrent dans la région (Bᵢ) déterminée de la lentille de soudure.
